# EUROPEAN PATENT APPLICATION

(11) **EP 1 626 165 A1**
(43) Date of publication of application: **15.02.2006**
(21) Application number: 05012619.2
(22) Date of filing: 13.06.2005
(51) Int. Cl.: F01N 7/10, F01N 7/18

(54) **Power system exhaust manifold**

(30) Priority: 12.08.2004 US 916416
(71) Applicant: Perkins Engines Company Limited, Peterborough PE1 5NA (GB)
(72) Inventor: Dirker, Martin Wayne, c/o Caterpillar Inc., 61629 Peoria (US)
(74) Representative: Murnane, Graham John

(57) **Abstract**

An exhaust manifold (26) for a power system (10) has a first pipe section (28) with at least one inlet (32) configured to fluidly connect the first pipe section to the power system. The exhaust manifold also has a second pipe section (30) disposed adjacent the first pipe section with at least one inlet configured to fluidly connect the second pipe section to the power system. The exhaust manifold further has at least one outlet (34) in fluid communication with the first pipe section and the second pipe section, and at least one bridge member (44) rigidly connecting the first pipe section and the second pipe section.

## Description

### Technical Field

The present disclosure relates to an exhaust manifold and, more particularly, to an exhaust manifold for a power system.

### Background

An exhaust manifold is used to convey exhaust gases from a power source to an exhaust system that may include a turbocharger. The exhaust gases from the power source flowing through the exhaust manifold may thermally load the exhaust manifold. The connection of the exhaust manifold to the power system may vibrationally load the exhaust manifold. The turbocharger, which may be physically supported by the exhaust system, may mechanically and/or vibrationally load the exhaust manifold. Thermal loading may be caused by expansion of a material from which the exhaust manifold is formed and the interaction with various constraint points of the exhaust manifold. Vibrational loading may be caused by natural frequencies of the power source and/or the turbocharger connected to the exhaust manifold, as well as environmentally generated frequencies. Mechanical loading may be caused by the turbocharger and various other exhaust system components having their weight supported by the exhaust manifold. If these thermal, vibrational, and mechanical loads are not accommodated, stresses may be induced within the exhaust manifold that can lead to failure.

One solution to accommodating thermal, vibrational, and mechanical loading of an exhaust manifold is described in U.S. Patent No. 6,256,990 ("the '990 patent") issued to Itoh on 10 July 2001. The '990 patent describes an exhaust manifold integrally cast with a turbine housing. In particular, the turbine housing-integrated exhaust manifold of the '990 patent describes a single integral casting that includes pipe portions having a plurality of ports and flanges, a converged portion connected to the pipe portions, and a neck portion that connects a turbine housing to the converged portion.

Although the turbine housing-integrated exhaust manifold of the '990 patent may accommodate some degree of thermal, vibrational, and mechanical loading, the turbine housing-integrated exhaust manifold may be expensive and may impose restrictive exhaust system design limitations. In particular, because the turbine housing is integral to the exhaust manifold, the turbine housing-integrated exhaust manifold of the '990 patent does not allow any relocation of the turbo charger relative to the exhaust manifold. Further, the casting equipment required to produce the turbine housing-integrated exhaust manifold may be large and complex, thereby increasing the cost of the integral part.

The disclosed exhaust manifold is directed to overcoming one or more of the problems set forth above.

### Summary of the Invention

In one aspect, the present disclosure is directed to an exhaust manifold for a power system that includes a first pipe section with at least one inlet configured to fluidly connect the first pipe section to the power system. The exhaust manifold also includes a second pipe section disposed adjacent the first pipe section with at least one inlet configured to fluidly connect the second pipe section to the power system. The exhaust manifold further includes at least one outlet in fluid communication with the first pipe section and the second pipe section, and at least one bridge member rigidly connecting the first pipe section and the second pipe section.

In another aspect, the present disclosure is directed to a method of assembling an exhaust manifold to a power system having an engine. The method includes inserting at least one fastener through at least one oversize aperture in the exhaust manifold to engage the engine. The method further includes applying a predetermined torque to the fastener such that the at least one fastener allows movement of the exhaust manifold relative to the engine after assembly.

### Brief Description of the Drawings

Fig. 1 is a diagrammatic illustration of a power system having an exemplary disclosed exhaust manifold; and
Fig. 2 is a perspective view of the exhaust manifold of Fig. 1.

### Detailed Description

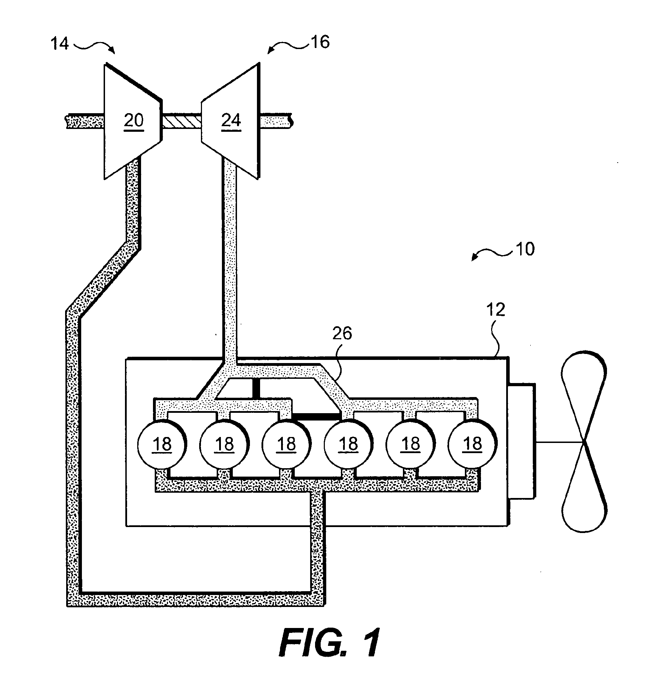

Fig. 1 illustrates a power system 10. Power system 10 may include an engine 12 such as, for example, a diesel engine, a gasoline engine, a natural gas engine, or any other engine apparent to one skilled in the art. In one embodiment, engine 12 may be a multi-cylinder engine such as, for example, a six-cylinder engine. It is contemplated that engine 12 may include additional or fewer cylinders. Power system 10 may also include other sources of power, such as a furnace or any other source of power known in the art. Power system 10 may further include an air induction system 14 and an exhaust system 16.

Air induction system 14 may be configured to introduce compressed air into a combustion chamber 18 of engine 12. Air induction system 14 may include a compressor 20 connected to engine 12 via an intake manifold 22. Compressor 20 may include a fixed geometry type compressor, a variable geometry type compressor, or any other type of compressor known in the art. It is contemplated that more than one compressor 20 may be included and disposed in parallel or in series relationship. It is further contemplated that compressor 20 may be omitted, for example, when a non-compressed air induction system is desired.

Exhaust system 16 may be configured to direct exhaust from engine 12 to a turbine 24 via an exhaust manifold 26. Turbine 24 may be connected to compressor 20 to drive compressor 20. In particular, as the hot exhaust gases exiting engine 12 expand against the blades (not shown) of turbine 24, turbine 24 may be caused to rotate, thereby rotating connected compressor 20. It is contemplated that more than one turbine 24 may be included within exhaust system 16 and disposed in parallel or in series relationship. It is also contemplated that turbine 24 may alternately be omitted and compressor 20 driven by engine 12 mechanically, hydraulically, electrically, or in any other manner known in the art.

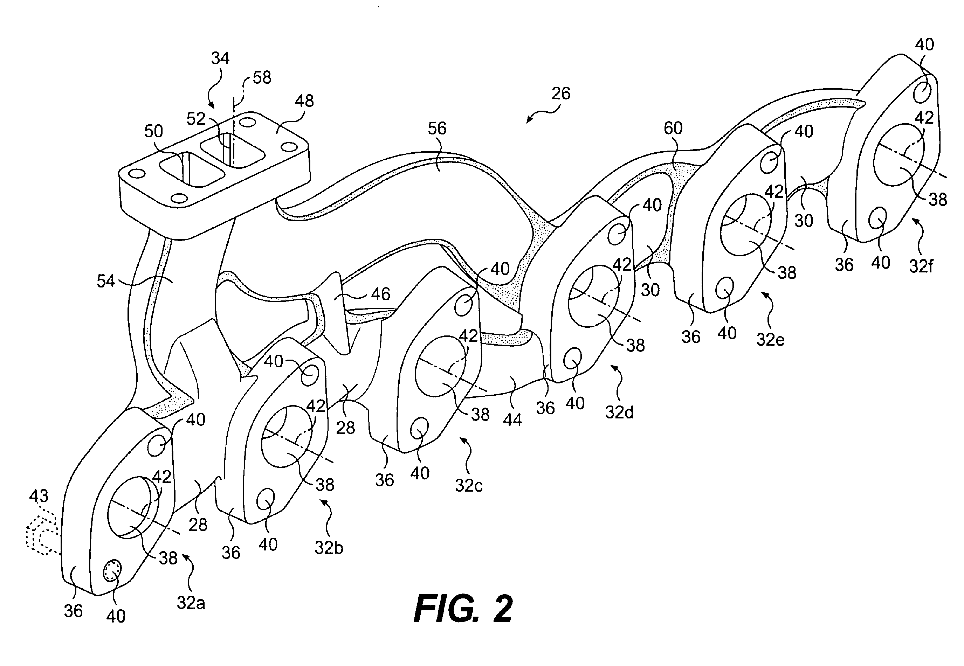

As illustrated in Fig. 2, exhaust manifold 26 may be formed as a single integral component through a sand-casting process. In particular, exhaust manifold 26 may include a first pipe section 28, a second pipe section 30, a plurality of inlets 32a-f disposed in each of first and second pipe sections 28, 30, a single common outlet 34, and first and second bridge members 44, 46.

Each of first and second pipe sections 28, 30 may be hollow tubular members configured to collect exhaust from inlets 32. First and second pipe sections 28, 30 may be substantially the same length, connected to the same number of inlets 32a-f, and have substantially circular cross-sections. In one embodiment, first pipe section 28 may be connected to three inlets 32a, 32b, 32c, and second pipe section 30 may be connected to three inlets 32d, 32e, 32f. First and second pipe sections 28, 30 may have generally serpentine trajectories to facilitate fluid flow and to allow flexure in multiple directions during thermal expansion. It is contemplated that first and second pipe sections 28, 30 may have different lengths, be connected to different numbers of inlets 32a-f, have a cross-sectional shape other than circular, and/or have a trajectory other than serpentine.

Each inlet 32a-f may be configured to connect one of first and second pipe sections 28, 30 to one combustion chamber 18 of engine 12 (see Fig. 1) and may include a means for connecting inlets 32a-f to first and second pipe sections 28, 30. The means for connecting may include, for example, a flanged end portion 36, threaded concentric flow members, tapered concentric flow members, a clamp, or any other means for connecting known in the art. Each flanged end portion 36 may be integral to either first pipe section 28 or second pipe section 30, or alternately connected to first or second pipe sections 28 by means of welding. Flanged end portion 36 may have a centrally disposed through-hole 38 and two fastener apertures 40. Flanged end portion 36 may have a substantially planar mating surface that is orthogonal to an axis 42 through each of central through holes 38. Through hole 38 may be configured to align with an outlet port (not shown) of combustion chamber 18 after assembly of exhaust manifold 26 to engine 12.

Apertures 40 may be configured to receive fasteners 43 (only one shown), such as a bolt, for fastening exhaust manifold 26 to engine 12. Some or all of apertures 40 may be oversized relative to the associated fasteners. Specifically, aperture diameters may be manufactured to be between 20% and 60% greater than fastener diameters, with a preferable range of 35% to 50% greater, and most preferred aperture diameters of approximately 40% greater than fastener diameters. For example, an aperture diameter of between approximately 12 mm and 16 mm may be used with an M10 bolt, with a preferred aperture diameter of between approximately 13.5 mm and 15 mm, and a most preferred diameter of approximately 14 mm. It is contemplated that one or more apertures 40 disposed in one or more flanged end portions 36 of centrally located inlets such as, for example, 32c and/or 32d, may have an aperture diameter of a conventional nominal size relative to the fastener to anchor the exhaust manifold 26 at a central location, while allowing thermal expansion away from the central location. It is further contemplated that flanged end portions 36 of alternate inlets may have apertures 40 with conventional nominal aperture diameter sizes.

Outlet 34 may be configured to direct exhaust flows from first and second pipe sections 28, 30 to turbine 24 and may be offset towards first pipe section 28 relative to a point generally midway between first pipe section 28 and second pipe section 30. Outlet 34 may include a means for connecting exhaust manifold 26 to turbine 24 that may include, for example, a flange 48, threaded concentric flow members, tapered concentric flow members, a clamp, or any other means for connecting known in the art. Flange 48 may have a substantially planar mating surface that may be generally orthogonal to the planar mating surfaces of flanged end portions 36. The substantially planar mating surface of flange 48 may be configured to mate against a similar flange mating surface of turbine 24 mounted vertically above exhaust manifold 26, relative to engine 12. It is contemplated that the substantially planar mating surface of flange 48 may alternately be configured to mount a turbine hung from exhaust manifold 26. Flange 48 may include a first orifice 50 and a second orifice 52.

First orifice 50 may connect outlet 34 with first pipe section 28 via a first fluid conduit 54. Second orifice 52 may connect outlet 34 with second pipe section 30 via a second fluid conduit 56 and have a centrally located axis 58 that is substantially aligned with the flow of exhaust through second orifice 52. In one embodiment, second fluid conduit 56 is longer than first fluid conduit 54. It is contemplated that second fluid conduit 56 may alternately be shorter or the same size as first fluid conduit 54. Both first fluid conduit 54 and second fluid conduit 56 may have generally arcuate or serpentine trajectories to facilitate fluid flow and to allow flexure in multiple directions during thermal expansion. It is contemplated that a single orifice may alternately be included within outlet 34 that is fluidly connected to both first and second fluid conduits 54, 56. It is further contemplated that one or both of first and second fluid conduits 54, 56 may have a trajectory other than arcuate or serpentine.

First bridge member 44 may be disposed between first and second pipe sections 28, 30 to permanently and rigidly connect first and second pipe sections 28, 30 to each other. In particular, first bridge member 44 may be a solid member that connects flanged end portion 36 of inlet 32e to flanged end portion 36 of inlet 32d. It is contemplated that first bridge member 44 may alternately be hollow and that additional or alternate flange connections may be implemented.

Second bridge member 46 may be disposed between first pipe section 28 and first fluid conduit 54 to permanently and rigidly connect first pipe section 28 and first fluid conduit 54 to each other. It is contemplated that second bridge member 46 may be omitted, that the position of second bridge member 46 may be altered, or that additional bridge members may be included, if desired.

### Industrial Applicability

The disclosed exhaust manifold may be applicable to any combustion-type device such as, for example, an engine, a furnace, or any other device known in the art where the flow of hot exhaust gases must be directed from the combustion device to a turbine or other exhaust system components. Exhaust manifold 26 may be a simple, inexpensive, and durable solution to accommodating thermal, vibrational, and mechanical loading of an exhaust system while allowing system design flexibility. Certain aspects of the manufacture and assembly process of exhaust manifold 26 will now be explained.

As described above, exhaust manifold 26 may be formed from a sand casting process. Sand casting is the process of making parts wherein molten metal is poured into a mold cavity formed out of sand. The more complex a part is, the more complex the mold used to form the part must be. The fewer the number of mold parts, the less expensive the molds and the processes of making the parts are. In a two-part mold, one half of the mold is called the cope and the other half is called the drag. The parting line or the parting surface is the line or surface that separates the cope and drag.

Exhaust manifold 26 may be formed as a single cast part using a simple two-half mold. As illustrated in Fig. 2, a single split line 60 denotes where the mold used to form exhaust manifold 26 was split when exhaust manifold 26 was removed from the mold. Also the draft angles may be incorporated internally and the flow paths may be free of bosses or other restricting protrusions. Because exhaust manifold 26 may be formed as a single integral part, exhaust manifold 26 may be free of joints, which can be prone to leakage, especially during thermal expansion.

The location of first and second bridge members 44, 46 may provide benefits during the manufacturing process. First and second bridge members 44, 46 being substantially centrally located may provide a means of aligning first pipe section 28 and the associated inlets 32a-c with second pipe section 30 and associated inlets 32d-f during introduction of the molten metal and while the molten metal is hardening.

Exhaust manifold 26 may be assembled to engine 12 by aligning inlets 32a-fwith outlet ports (not shown) of engine 12 and inserting fasteners (not shown) through oversized apertures 40 into threaded holes (not shown) of engine 12. In particular, as the fasteners are inserted through apertures 40 into the holes located on engine 12, they are tightened to a predetermined degree of fastening force. An exemplary torque of between 20 and 50 Nm may be applied, with a preference to a torque of about 33 Nm. Even after the application of torque, portions of exhaust manifold 26 may still be allowed some movement relative to engine 12 to accommodate for thermal expansion differences between exhaust manifold 26 and engine 12. In addition to the fasteners inserted through apertures 40 that have oversized diameters, one or more fasteners may be inserted through one or more apertures 40 that have conventional nominally sized diameters to securely anchor at least a portion of exhaust manifold to engine 12.

Several advantages may be realized from the overall design of exhaust manifold 26. In particular, the serpentine and arcuate nature of first pipe section 28, second pipe section 30, first fluid conduit 54, and second fluid conduit 56 may allow for thermal expansion in multiple directions and in multiple planes. Further, because exhaust manifold 26 is separate from turbine 24, design flexibility of exhaust system 16 may be enhanced. Specifically, turbine 24 can be located apart from exhaust manifold 26 with an intermediate fluid conduit (not shown) disposed between exhaust manifold 26 and turbine 24.

It will be apparent to those skilled in the art that various modifications and variations can be made to the disclosed exhaust manifold. For example, one or more strengthening ribs may be associated with any one of first and 28, second pipe section 30, first fluid conduit 54, and second fluid conduit 56. Other embodiments will be apparent to those skilled in the art from consideration of the specification and practice of the disclosed exhaust manifold. It is intended that the specification and examples be considered as exemplary only, with a true scope being indicated by the following claims and their equivalents.

## Claims

1. An exhaust manifold (26) for a power system (10), comprising:
a first pipe section (28) having at least one inlet (32) configured to fluidly connect the first pipe section to the power system;
a second pipe section (30) disposed adjacent the first pipe section and having at least one inlet configured to fluidly connect the second pipe section to the power system;
at least one outlet (34) in fluid communication with the first pipe section and the second pipe section; and
at least one bridge member (44) rigidly connecting the first pipe section to the second pipe section.

2. The exhaust manifold of claim 1, wherein the at least one inlet of at least one of the first and second pipe sections includes a means (36) for mechanically connecting the exhaust manifold to the power system while allowing movement of the exhaust manifold relative to the power system.

3. The exhaust manifold of claim 2, wherein the means for mechanically connecting includes a flange (36) connected to the at least one of the first and second pipe sections.

4. The exhaust manifold of claim 3, wherein the flange includes an aperture (40) for receiving a fastener.

5. The exhaust manifold of claim 4, wherein the aperture is oversized relative to the fastener.

6. The exhaust manifold of claim 5, wherein the aperture has a diameter that is between approximately 20% and 60% greater in size than the fastener.

7. The exhaust manifold of claim 2, wherein the means for mechanically connecting includes a first flange (36) connected to the first pipe section and a second flange (32) connected to the second pipe section, and the at least one bridge member is disposed between the first flange and the second flange.

8. A method of assembling an exhaust manifold (26) to a power system (10) having an engine (12), the method comprising:
inserting at least one fastener through at least one oversize aperture (40) in the exhaust manifold to engage the engine; and
applying a predetermined torque to the fastener such that the at least one fastener allows movement of at least a portion of the exhaust manifold relative to the engine after assembly.

9. The method of claim 8, further including inserting at least a second fastener through at least one aperture nominally sized for the at least a second fastener to anchor at least a second portion of the exhaust manifold to the engine.

10. A power system (10), comprising:
an engine (12);
a turbocharger (24) in fluid communication with an exhaust flow of the engine and configured to compress air directed into the engine;
an exhaust manifold (26) as in one of claims 1-7 fluidly disposed between the engine and the turbocharger.
